# EUROPÄISCHE PATENTSCHRIFT

(11) **EP 0 581 739 B1**
(45) Veröffentlichungstag und Bekanntmachung des Hinweises auf die Patenterteilung: **27.12.1996**
(21) Anmeldenummer: 93810526.9
(22) Anmeldetag: 21.07.1993
(51) Int. Cl.: C08G 18/48

(54) **Härterzusammensetzung für die Herstellung von Polyurethanformkörpern**
Curing agents for the preparation of polyurethane moulded parts
Composition de durcisseurs pour la préparation de pièces moulées de polyuréthane

(30) Priorität: 30.07.1992 CH 2403/92
(43) Veröffentlichungstag der Anmeldung: 02.02.1994
(73) Patentinhaber: Ciba SC Holding AG, 4057 Basel (CH)
(72) Erfinder: Spitzer, Martin, Dr., D-7801 Ehrenkirchen 2 (DE); Freistädter, Hans, CH-4310 Rheinfelden (CH)

(56) Entgegenhaltungen:
- EP-A- 0 512 947
- WO-A-90/15835
- WO-A-91/12286
- US-A- 3 979 364

## Beschreibung

Die Erfindung betrifft neue Härterzusammensetzungen für Polyisocyanate der Diphenylmethanreihe, Reaktionsgemische auf Basis dieser Polyisocyanate und Härterzusammensetzungen, ein Verfahren zur Herstellung von Polyurethanformkörpern unter Verwendung der beschriebenen Reaktionsgemische und die Polyurethanformkörper, die aus den Reaktionsgemischen erhältlich sind.

Bei der Herstellung von Polyurethanformkörpern werden in der Praxis vorwiegend Polyisocyanate der Diphenylmethanreihe als Isocyanatkomponente eingesetzt. Um die Eigenschaften des Polyurethanmaterials steuern zu können, werden als Härter im allgemeinen Zusammensetzungen aus zwei oder mehreren verschiedenen Reaktionskomponenten eingesetzt, wobei sich diese in Art, Funktionalität und Molekulargewicht mehr oder weniger stark unterscheiden können. Je nach den Bestandteilen der Härterzusammensetzung können so z. B. die mechanischen oder thermischen Eigenschaften von Polyurethanformkörpern, aber auch die Länge der Verarbeitungszeit des Reaktionsgemisches aus Polyisocyanat und Härter oder der Verlauf der Aushärtung oder die Viskosität dieses Gemisches eingestellt werden. Oftmals werden z. B. Zusammensetzungen als Härter eingesetzt, die zumindest eine niedrigmolekulare und eine langkettige Reaktionskomponente für das Isocyanat enthalten, insbesondere entsprechende Polyole und/oder Polyamine. Die niedrigmolekulare Reaktionskomponente steigert unter anderem die Härte des erhaltenen Polyurethanmaterials, die langkettige seine Zähigkeit. Es ist also nicht verwunderlich, dass schon viele unterschiedliche Härterzusammensetzungen für die Herstellung von Polyurethanmaterialien beschrieben worden.

Die Herstellung von Polyurethanmaterialien auf Basis von Polyisocyanaten der Diphenylmethanreihe mit Hilfe von Mischungen aus niedrigmolekularen Polyolen und langkettigen Polyaminen ist beispielsweise aus der EP-A-0 265 781 (=US-A-5,028,684) oder der US-A-3,267,050 bekannt. So wird z. B. in der zuletzt genannten US-Patentschrift vorgeschlagen, ein Gemisch aus Polyolen und mindestens einem

Poly(oxyalkylen)polyamin zur Härtung von Polyisocyanaten, auch der Diphenylmethanreihe, zu verwenden, um Polyurethanmaterialien mit besonders guter mechanischer Festigkeit herzustellen, und z. B. die Herstellung eines Polyurethanelastomeren durch gemeinsame Umsetzung von Diisocyanatodiphenylmethan mit 1,4-Butandiol sowie einem Polypropylenglycol mit einem Molekulargewicht von ca. 2000 und einem Poly(oxypropylen)diamin von etwa gleichem Molekulargewicht beschrieben.

Die vorliegende Erfindung möchte insbesondere die praktische Anwendung von Stoffgemischen auf Basis von niedrigmolekularen Polyolen und langkettigen Polyaminen als Polyisocyanathärter weiter vereinfachen.

Hierzu sollen Härterzusammensetzungen der genannten Art zur Verfügung gestellt werden, die sehr lange gelagert werden können, ohne dass die Gefahr besteht, dass sich ihre einzelnen Bestandteile hierbei entmischen. Dieses Problem tritt häufig bei Stoffgemischen, wie den oben genannten, auf und ist z. B. auch in den Patentschriften US-A-3,993,576 und US-A-4,826,885 behandelt.

Weiterhin sollen die Erfordernisse an den Formenbau vermindert werden, so dass unter anderem die Herstellung grosser Modelle und kleiner Stückzahlen mit Hilfe von Polyurethanmassen weniger aufwendig wird. Grossen Aufwand beim Formenbau, insbesondere beim Bau grosser Formen, erfordert die heute übliche Beheizung der Formen, weil hierbei z. B. eine sehr gleichmässige Erwärmung sichergestellt werden muss, um die Ausbildung von Spannungen im Polyurethankörper zu vermeiden. Ein anderer wesentlicher Nachteil dieser Arbeitsweise ist, dass es aufgrund der Erwärmung der Formen zu beträchtlichen Massungenauigkeiten am Formkörper kommen kann.

Der Grund für das Arbeiten mit heissen Formen liegt im weitverbreiteten Auftreten einer Sprödphase während der ersten Phase der Aushärtung von Polyurethanmaterialien. Hierbei handelt es sich um eine Zeitphase, in der der aus dem flüssigen Reaktionsgemisch frisch gebildete Formkörper zwar schon im festen Zustand ist, die Masse aber vorübergehend sehr spröde ist. Die Sprödphase ist dabei im Regelfall wesentlich länger als der Zeitraum, der nötig ist, das Reaktionsgemisch in den festen Zustand zu überführen. Eine Sprödphase ist besonders deshalb von Nachteil, weil ein Entformen während dieser Zeitperiode leicht zur Beschädigung oder gar zur Zerstörung des Formkörpers führen kann, da die Formkörper dabei oftmals einer relativ starken mechanischen Belastung unterworfen werden müssen. Auch nach der Entformung müssen solche Formkörper bis zum Ende der Sprödphase noch relativ vorsichtig behandelt werden.

Relativ lange Sprödphasen, je nach Reaktivität des Reaktionsgemisches beispielsweise beginnend einige Minuten nach Zusammengeben von Polyisocyanat und Härter und manchmal bis zu mehrere Stunden andauernd, treten aber bei vielen Polyurethanreaktionsgemischen dann auf, wenn die Aushärtung des Gemisches bei Raumtemperatur oder nur mässig erhöhter Temperatur erfolgt, wobei die Dauer dieser Sprödphase im allgemeinen um so länger ist, je länger die Topfzeit des verwendeten Reaktionsgemisches ist. Man versucht daher im allgemeinen, Schäden aufgrund einer Sprödphase dadurch zu vermeiden, dass die Härtung des Reaktiongemisches mit Hilfe beheizter Formen durchgeführt wird, wie es auch in den oben genannten Dokumenten des Standes der Technik beschrieben ist. Hierdurch wird der kritische Bereich des Reaktionsumsatzes, bei dem die Sprödphase auftritt, besonders schnell durchlaufen, und eine Sprödphase fällt in der Praxis nicht mehr ins Gewicht.

Der zweite wesentliche Teil der Aufgabe der vorliegenden Erfindung ist es daher, Härtergemische für Polyisocyanate der Diphenylmethanreihe auf Basis von Polyetherpolyaminen und Polyolen so weiterzuentwickeln, dass sie eine Aushärtung der Polyisocyanate schon bei Raumtemperatur und mit Hilfe unbeheizter Formen ermöglichen, ohne dass hierbei eine messbare Sprödphase auftritt.

Zur Lösung dieser Aufgabe schlägt die Erfindung eine Zusammensetzung als Härter vor, die a) ein Polyol mit durchschnittlich 3 bis 8 Hydroxylgruppen pro Molekül und einem mittleren Molekulargewicht pro Hydroxylgruppe bis zu 150; b) ein Polyetherpolyol mit durchschnittlich 2 bis 3 Hydroxylgruppen pro Molekül und einem mittleren Molekulargewicht pro Hydroxylgruppe von 150 bis 500 sowie c) ein Poly(oxyalkylen)polyamin mit durchschnittlich 2 bis 4 Aminogruppen pro Molekül und einem mittleren Gesamtmolekulargewicht zwischen 1000 und 3000 enthält.

Die erfindungsgemässen Zusammensetzungen ermöglichen die Härtung von Polyisocyanaten der Diphenylmethanreihe bei Raumtemperatur oder leicht erhöhter Temperatur, ohne dass eine Sprödphase durchlaufen wird, d. h. das einmal festgewordene Material bleibt während der gesamten Aushärtungszeit elastisch. Weiterhin zeigt Polyurethanmaterial, das mit einer erfindungsgemässen Härterzusammensetzung hergestellt worden ist, gute mechanische Festigkeit und insbesondere gute Werte für die Rissfestigkeit. Gegenüber identischen Zusammensetzungen, die jedoch langkettige Polyole an Stelle des Poly(oxyalkylen)polyamins enthalten, ist zudem oftmals die Wärmeformbeständigkeit wesentlich verbessert. Dies ist ein nicht unbedeutender Vorteil, weil eine mechanische Nachbearbeitung der erfindungsgemässen Polyurethanformkörper, z.B. mit Hilfe von Bohrern, Fräsen oder Sägen, wie es häufig erforderlich ist, hierdurch wesentlich erleichtert wird. Die erfindungsgemässen Zusammensetzungen sind ausserdem auch nach sehr langer Lagerung ohne Probleme einzusetzen, da keine Entmischung ihrer flüssigen Komponenten auftritt, auch wenn sie bei Temperaturen im Bereich der Raumtemperatur gelagert werden.

Als Bestandteil a) der erfindungsgemässen Härterzusammensetzungen kommen z. B. Trimethylolpropan, Glycerin, Erythrit, Pentaerythrit; Pentite, wie Arabit, Adonit oder Xylit; Hexite, wie Sorbit, Mannit oder Dulcit, die unterschiedlichsten Zuckerarten, z. B. Saccharose, oder auch Zucker- und Stärkederivate in Frage. Besonders gut verwendet werden können niedermolekulare Umsetzungsprodukte von Polyhydroxylverbindungen, wie den genannten, mit Ethylen- und/oder Propylenoxid, ebenso wie die niedermolekularen Umsetzungsprodukte anderer Verbindungen, die zur Reaktion mit Ethylen- und/oder Propylenoxid fähige Gruppen in genügender Anzahl enthalten, z. B. die entsprechenden Umsetzungsprodukte von Aminen, wie insbesondere Ammoniak, Ethylendiamin, 1,4-Diaminobenzol, 2,4-Diaminotoluol, 2,4'-Diaminodiphenylmethan, 4,4'-Diaminodiphenylmethan, 1 -Methyl-3,5-diethyl-2,4-diaminobenzol und/oder 1-Methyl-3,5-diethyl-2,6-diaminobenzol. Weitere geeignete Polyamine sind in der EP-A-0 265 781 aufgeführt. Es können auch Gemische geeigneter Polyole als Komponente a) der erfindungsgemässen Zusammensetzungen eingesetzt werden.

Die Untergrenze für das mittlere Molekulargewicht pro Hydroxylgruppe liegt bei den als Bestandteil a) vorgesehenen Polyolen bevorzugt bei 60. Besonders gute Ergebnisse werden erreicht, wenn das mittlere Molekulargewicht pro Hydroxylgruppe liegt über 70 liegt.

Ganz besonders bevorzugt als Bestandteil a) der erfindungsgemässen Härterzusammensetzungen sind Umsetzungsprodukte von Propylenoxid mit Aminen, insbesondere mit Ethylendiamin, und mit Polyhydroxylverbindungen, insbesondere Zuckern. Solche Produkte sind, teilweise als Gemisch mit anderen der Definition für die Komponente a) entsprechenden Polyolen, auch kommerziell erhältlich, z. B. unter der Bezeichnung Quadrol L® und Lupranol 3321®.

Die erfindungsgemässen Härterzusammensetzungen können z. B. 20 bis 80 Gew.-%, insbesondere 30 bis 65 Gew.-%, des Bestandteils a) enthalten.

Als Bestandteil b) der erfindungsgemässen Polyolkomponenten werden bestimmte Polyetherpolyole eingesetzt. Diese Polyetherpolyole können beispielsweise durch Reaktion eines Starters mit Alkylenoxiden, z. B. mit Ethylen-, Propylen- oder Butylenoxiden, oder Tetrahydrofuran erhalten werden. Als Starter kommen dabei alle üblicherweise zur Herstellung von Polyetherpolyolen einer Funktionalität von 2 oder 3 geeigneten Starter in Frage, z. B. Wasser, aliphatische, cycloaliphatische oder aromatische Polyhydroxylverbindungen mit 2 oder 3 Hydroxylgruppen, wie Ethylenglycol, Propylenglycol, Butandiole, Hexandiole, Octandiole, Dihydroxybenzole oder Bisphenole, z. B. Bisphenol A, Trimethylolpropan oder Glycerin, oder Amine (s. Ullmanns Encyclopädie der technischen Chemie, 4. Aufl. Bd. 19, Verlag Chemie GmbH, Weinheim 1980, S 31 - 38 und S. 304, 305).

Der Bestandteil b) ist im allgemeinen in einer Menge von 5 bis 30, insbesondere von 10 bis 20, Gew.-%, bezogen auf die gesamte Härterzusammensetzung, vorhanden und kann selbstverständlich ein Gemisch entsprechender Polyetherpolyole sein.

Sehr gut geeignet als Bestandteil b) der erfindungsgemässen Zusammensetzungen sind Polyetherpolyole auf Basis von Ethylenoxid und Polyetherpolyole auf Basis von Propylenoxid sowie entsprechende Ethylen-/Propylenoxidcopolymere, wobei es sich sowohl um statistische als auch um Blockcopolymere handeln kann. Das Verhältnis von Ethylenoxid zu Propylenoxid kann bei diesen Copolymeren in weiten Grenzen variieren. So können z. B. nur die endständigen Hydroxylgruppen der Polyetherpolyole mit Ethylenoxid umgesetzt sein (Endverkappung). Der Gehalt der für den Bestandteil b) geeigneten Polyetherpolyole an Ethylenoxideinheiten kann z. B. aber auch Werte bis 75 oder 80 Gew.-% annehmen. Meist wird es zweckmässig sein, wenn die Polyetherpolyole zumindest mit Ethylenoxid endverkappt sind. Sie weisen dann nämlich endständige primäre Hydroxylgruppen auf, die reaktiver sind als die von der Umsetzung mit Propylenoxid herrührenden sekundaren Hydroxylgruppen.

Hervorzuheben sind ausserdem Polytetrahydrofurane, die wie die oben schon angeführten Polyalkylenglycole ebenfalls kommerziell erhältlich sind (Handelsname z. B. POLYMEG®). Herstellung und Eigenschaften solcher Polytetrahydrofurane sind z. B. in Ullmanns Encyclopädie der technischen Chemie, 4. Aufl., Bd. 19, Verlag Chemie GmbH, Weinheim 1980, S. 297 - 299 näher beschrieben sind.

Die Verwendung von Polytetrahydrofuran ist im allgemeinen für maschinelle Herstellungsverfahren von Polyurethanformkörpern bevorzugt, weil Polyteuahydrofurane nur primäre Hydroxylgruppen aufweisen und deshalb besonders reaktiv sind. Der Polytetrahydrofurangehalt einer erfindungsgemässen Härterzusammensetzung beträgt dann vorzugsweise 10 bis 20 Gew.-%. Für die Herstellung von Polyurethanformkörpern durch Handverguss eignen sich dagegen besonders diejenigen der erfindungsgemässen Zusammensetzungen, die Polypropylenglycole als Bestandteil b) enthalten.

Für die Erfindung geeignete Poly(oxyalkylen)polyamine sind bekannt und beispielsweise gemäss der eingangs erwähnten US-Patentschrift 3,267,050 aus Polyetherpolyolen passender Funktionalität und passenden Molekulargewichts zu erhalten. Sehr gut geeignete Typen sind auch kommerziell unter der Bezeichnung JEFFAMINE® erhältlich. Als Beispiele seien hier angeführt:

JEFFAMINE®D 2000, ein aminoterminiertes Polypropylenglycol der allgemeinen Formel H₂NCH(CH₃)CH₂-[OCH₂CH(CH₃)]ₓ-NH₂, worin x im Durchschnitt den Wert 33 hat, so dass ein Gesamtmolekulargewicht von ca. 2000 resultiert;

JEFFAMINE®ED 2001 mit folgender Formel H₂NCH(CH₃)CH₂-[OCH₂CH(CH₃)]ₐ[OCH₂CH₂]_{b}-[OCH₂CH(CH₃)]_{c}-NH₂, wobei b im Durchschnitt etwa 40,5 und a+c etwa 2,5 beträgt;

JEFFAMINE®BUD 2000, ein harnstoffterminierter Polypropylenether der Formel 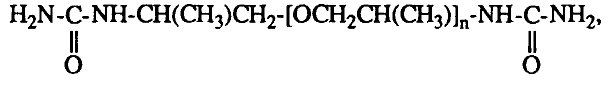 worin n im Durchschnitt etwa 33 beträgt, so dass ein Molekulargewicht von etwa 2075 resultiert; und schliesslich

JEFFAMINE®T 3000, ein glyceringestartetes Poly(oxypropylen)triamin der Formel 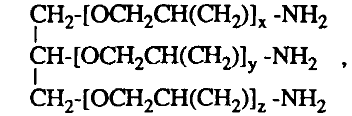 Molekulargewicht bei etwa 3000 liegt.

Die Poly(oxyalkylen)polyamine liegen bevorzugt in einer Menge von 5 bis 25 Gewichtsprozent, bezogen auf die gesamte erfindungsgemässe Zusammensetzung vor, da hierbei im allgemeinen besonders gute Werte sowohl für die Viskosität des Reaktionsgemisches aus der Härterzusammensetzung und einem Polyisocyanat der Diphenylmethanreihe und die Reaktivität des Reaktionsgemisches als auch für die mechanischen und thermischen Eigenschaften der hieraus erhaltenen gehärteten Produkte erhalten werden.

Vom chemischen Aufbau her handelt es sich bei den Poly(oxyalkylen)polyaminen bevorzugt um Poly(oxypropylen)polyamine. Als Molekulargewicht hat sich weiterhin ein Wert um 2000 besonders bewährt. JEFFAMINE®D 2000 ist daher von den oben genannten JEFFAMINE®-Beispielen besonders bevorzugt.

Eine spezielle Ausführungsform der erfindungsgemässen Härterzusammensetzungen enthält als zusätzlichen Bestandteil d) ein weiteres Polyetherpolyol mit durchschnittlich 2 bis 4 Hydroxylgruppen pro Molekül und einem mittleren Molekulargewicht pro Hydroxylgruppe von mehr als 500. Von der chemischen Zusammensetzung her gilt für diese Polyetherpolyole, die als Komponente d) geeignet sind, das sinngemäss, was oben für die als Bestandteil b) geeigneten Polyetherpolyole gesagt wurde, so dass an dieser Stelle nur auf die dortigen Angaben verwiesen wird. Auch Polyetherpolyole, die feste organische Füllstoffe in disperser Verteilung und chemisch teilweise an den Polyether gebunden enthalten, wie Polymerpolyole und Polyharnstoffpolyole, sind jedoch als Bestandteil d) der erfindungsgemässen Zusammensetzungen geeignet. Bei Polymerpolyolen handelt es sich bekanntlich um Polymerdispersionen, die durch radikalische Polymerisation von geeigneten olefinischen Monomeren, insbesondere Acrylnitril, Styrol oder Gemische der beiden, in einem als Pfropfgrundlage dienenden Polyether hergestellt sind. Polyharnstoff-Polyole (PHD-Polyether) stellen eine Dispersion von Polyharnstoffen, die durch Reaktion von Polyisocyanaten mit Polyaminen in Gegenwart von Polyetherpolyolen erhältlich ist, und wobei ebenfalls eine teilweise chemische Verknüpfung des Polyharnstoffmaterials mit den Polyetherpolyolen über die Hydroxylgruppen an den Polyetherketten stattfindet. Polyole, wie die in diesem Abschnitt genannten, sind z. B. in Becker/Braun "Kunststoffhandbuch", Bd. 7 (Polyurethane), 2. Aufl., Carl Hanser Verlag, München Wien (1983), S.76, 77 näher beschrieben.

Durch Zugabe der Komponente d) lässt sich die Reaktivität der Reaktionsgemische mit den Polyisocyanaten und deren Anfangsviskosität zusätzlich verringern, ohne dass Eigenschaften, wie die Zähigkeit, beeinflusst werden. Im allgemeinen kann die Komponente d) in einer Menge bis zu 80 Gewichtsprozent, bezogen auf die Gesamtmenge der Komponenten c) und d) verwendet werden. Höhere Anteile sollten vermieden werden, um ein Polyurethanmaterial genügender Rissfestigkeit zu erhalten. Der Bestandteil d) ist vorzugsweise in einer Menge von 40 bis 70 Gewichtsprozent, bezogen auf die Gesamtmenge der Komponenten c) und d), in den erfindungsgemässen Härterzusammensetzungen enthalten. Die Komponente c) macht zusammen mit der Komponente d) bevorzugt etwa 13 bis 45 Gewichtsprozent der erfindungsgemässen Härterzusammensetzungen aus.

Die durchschnittliche Äquivalentmasse der gesamten erfindungsgemässen Härterzusammensetzung soll im allgemeinen zwischen 120 und 220 liegen; bevorzugt sind Werte von 150 bis 200. Bei dieser Berechnung sind primäre Aminogruppen, wie die der JEFFAMINE®, Hydroxylgruppen gleichgesetzt worden.

Weiterhin können die Zusammensetzungen übliche für die Polyurethantechnologie geeignete Zusatzstoffe in den üblichen Mengen enthalten. Dies sind z. B. Katalysatoren, sowohl basische, wie tertiäre Amine, z. B. N-Methylethanolamine, wie insbesondere N-Methyldiethanolamin, Triethanolamin, Dibenzylmethylamin, Diazabicyclooctan usw., als auch saure, z. B. zinnorganische Verbindungen, wie Dibutylzinnlaurat. Als weitere Zusatzstoffe seien genannt: Antischaummittel, z. B. Polysilicone, oberflächenaktive Stoffe, wie Rizinusöl, Trocknungsmittel, z. B. Molekularsiebe auf Zeolithbasis, interne Formtrennmittel, Füllstoffe, Farbstoffe, Pigmente, insbesondere Titandioxid, Flammschutzmittel oder Treibmittel, insbesondere Wasser. Weitere geeignete Zusatzstoffe sind auch in Becker/Braun "Kunststoffhandbuch", Bd. 7 (Polyurethane), 2. Aufl., Carl Hanser Verlag, München Wien (1983) angeführt. Der Gesamtgehalt der erfindungsgemässen Härterzusammensetzungen an Zusatzstoffen beträgt im allgemeinen 0 bis 30 Gew.-%.

Erfindungsgemässe Härterzusammensetzungen können zur manuellen und zur maschinellen Herstellung von Polyurethanformkörpern verwendet werden.

Dazu wird zunächst aus einem Polyisocyanat der Diphenylmethanreihe und zumindest einer der erfindungsgemässen Härterzusammensetzungen, gegebenenfalls unter Zugabe von Hilfs- und Zusatzstoffen, wie beispielsweise den im vorigen Abschnitt genannten, ein Reaktionsgemisch hergestellt.

Die Erfindung betrifft daher auch ein härtbares Reaktionsgemisch zur Herstellung von Polyurethanformkörpern, enthaltend ein Polyisocyanat der Diphenylmethanreihe und mindestens eine Härterkomponente, bei der es sich um eine der oben beschriebenen Zusammensetzungen handelt.

Unter "Polyisocyanat der Diphenylmethanreihe" werden hier Derivate des Diphenylmethans verstanden, die durchschnittlich mindestens zwei freie Isocyanatgruppen pro Molekül aufweisen. Bevorzugt werden im allgemeinen Polyisocyanate, die bei Umgebungstemperatur oder schon bei leicht erhöhten Temperaturen flüssig sind. Beispiele für geeignete Polyisocyanate sind monomere Diisocyanatodiphenylmethanisomere (MDI), wie 4,4'-Diisocyanatodiphenylmethan, 2,4'-Diisocyanatodiphenylmethan oder 2,2'-Diisocyanatodiphenylmethan, oder deren Gemische, wie z. B. ein Gemisch aus 60 Gew.-% des 2,4'- und 40 Gew.-% des 4,4'-Isomeren. Ebenfalls geeignet sind MDI-Polymertypen, also Substanzen der allgemeinen Formel 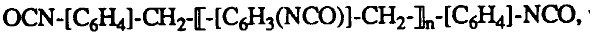 worin n im allgemeinen Werte bis 8 annimmt. Gegebenenfalls können die genannten Polymertypen auch im Gemisch mit Monomeren eingesetzt werden. So kann es sich z. B. um ein Gemisch mit 30 bis 70 Gew.-% Zweikernanteil (n = 0), 15 bis 40 Gew.-% Dreikernanteil (n = 1) und gegebenenfalls 15 bis 30 Gew.-% Höherkernanteil (n > 1) handeln. Solche und ähnliche Gemische sind ebenfalls im Handel erhältlich. Gut geeignet sind auch urethanisierte Diisocyanatodiphenylmethane, wie sie beispielsweise durch Vorreaktion von Diisocyanatodiphenylmethan mit niedermolekularen Di- oder Triolen erhalten werden können, carbodiimidisierte oder urethdionisierte Diisocyanatodiphenylmethane oder Gemische aus den genannten Diisocyanatodiphenylmethanderivaten. Verwendet werden können auch Diisocyanatodiphenylmethanderivate mit Biuret- oder Allophanatgruppen.

Besonders gute Eigenschaften weist eine Polyisocyanatzusammensetzung auf, die aus 5 bis 20 Gew.-% Polyisocyanaten, die durch eine Reaktion von Diisocyanatodiphenylmethanen über Isocyanatgruppen erhältlich sind, wie den entsprechenden Carbodiimiden oder Urethdionen (z. B. 7 bis 12 Gewichtsprozent Urethdion und 0 bis 5 Gewichtsprozent Carbodiimid), 2 bis 10 Gew.-% Diisocyanatodiphenylmethan-Polymertypen der allgemeinen Formel 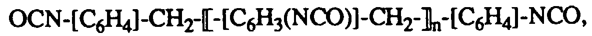 worin n ≥ 1 ist, und 70 bis 93 Gew.-% eines Gemisches aus monomeren Diisocyanatodiphenylmethanisomeren besteht, wobei dieses Gemisch wiederum aus 45 bis 90 Gew.-% 4,4'-Diisocyanatodiphenylmethan und 10 bis 55 Gew.-% 2,4'- und 2,2'-Diisocyanatodiphenylmethan besteht. Als Beispiel für eine Polyisocyanatzusammensetzung der genannten Zusammensetzung sei ein Gemisch aus ca. 70 Gew.-% Desmodur® CD und 30 Gew.-% Desmodur® VL 50 angeführt. Polyisocyanatzusammensetzungen wie diese weisen nämlich nur eine äusserst schwache Eigenfarbung auf (hellbeige) und ermöglichen es daher, besonders auch hellfarbige Formkörper sehr farbrein herzustellen. Um entsprechend farbreines Polyurethanmaterial mit Hilfe von Polyisocyanaten der Diphenylmethanreihe herzustellen, wurde bisher möglichst reines 4,4'-Diisocyanatodiphenylmethan als Härterzusammensetzung verwendet. Entsprechend reines 4,4'-Diisocyanatodiphenylmethan neigt aber dazu, bei Temperaturen von 0 °C bis Raumtemperatur auszukristallisieren und kann daher beispielsweise nicht bei niedrigen Temperaturen gelagert werden. Eine farbneutrale Polyisocyanatzusammensetzung, wie oben beschrieben, bleibt jedoch auch bei tieferen Temperaturen des oben genannten Bereichs fliessfahig. Die Erfindung betrifft daher auch ein Reaktionsgemisch, enthaltend die genannte Polyisocyanatzusammensetzung.

Die erfindungsgemässen Reaktionsgemische enthalten das Polyisocyanat in üblicher Menge, im allgemeinen entsprechend einer Isocyanatkennzahl (Quotient aus der Anzahl von Isocyanatgruppen und der Anzahl von mit Isocyanatgruppen reaktionsfähigen Gruppen im Reaktionsgemisch, multipliziert mit 100) zwischen 70 und 130, bevorzugt entsprechend einer Isocyanatkennzahl zwischen 90 und 110. Eine primäre Aminogruppe entspricht hierbei wieder einer Hydroxylgruppe.

Eine weitere besonders gute Ausführungsform der erfindungsgemässen Reaktionsgemische enthält N-Methyldiethanolamin als Katalysator. Da diese Verbindung nämlich zwei Hydroxylgruppen aufweist, nimmt sie wie ein Polyol an der Polyurethanbildung teil und kann sich somit während der Lebenszeit des Polyurethans sich nicht aus dem Material verflüchtigen (ausschwitzen).

Die Reaktionsgemische weisen bevorzugt relativ niedrige Mischviskositäten auf, z. B. im Bereich von 500 bis 1500 mPa·s.

Die Verarbeitungszeiten (Topfzeiten) der Reaktionsgemische liegen je nach verwendeter Polyisocyanat- und Härterzusammensetzung und der Isocyanatkennzahl des Gemisches im allgemeinen zwischen 15 Sekunden und 120 Minuten. Eine gewünschte Verarbeitungszeit kann besonders günstig und bei gleichbleibender Polyisocyanatkomponente und gleichbleibendem Mischungsverhältnis von Polyisocyanat zum Gesamtanteil an Harter im Reaktionsgemisch durch Verwendung unterschiedlicher Mengen verschiedener Härterzusammensetzungen eingestellt werden, die jeweils eine andere Verarbeitungszeit ermöglichen. Man kann hierzu z. B. ein Reaktionsgemisch auf Basis von zwei oder mehreren verschiedenen der erfindungsgemässen Härterzusammensetzungen herstellen.

Es kann sich bei dem Härter, der eine andere Verarbeitungszeit ermöglicht, aber auch um andersartige Härter handeln, soweit diese ebenfalls eine Aushärtung von Polyisocyanaten der Diphenylmethanreihe bei Raumtemperatur und ohne zusätzliche äussere Beheizung der Reaktionsmasse erlauben, ohne dass hierbei eine Sprödphase auftritt.

Eine weitere dieser Härterkomponenten ist beispielsweise in der EP-A-0 512 947 beschrieben. Hierbei handelt es sich um Zusammensetzungen, die e) ein Polyol mit durchschnittlich 3 bis 8, bevorzugt 4 bis 8 Hydroxylgruppen pro Molekül und einem mittleren Molekulargewicht pro Hydroxylgruppe bis zu 150; f) ein Polyetherpolyol mit durchschnittlich 2 bis 3 Hydroxylgruppen pro Molekül und einem mittleren Molekulargewicht pro Hydroxylgruppe von 150 bis 500, insbesondere ein entsprechendes Polypropylenglycol oder Polytetrahydrofuran oder ein Gemisch der beiden, sowie g) ein Polyetherpolyol mit durchschnittlich 2 bis 4 Hydroxylgruppen pro Molekül und einem mittleren Molekulargewicht pro Hydroxylgruppe von mehr als 1900 und gegebenenfalls h) ein Polyetherpolyol mit durchschnittlich 2 bis 4 Hydroxylgruppen pro Molekül enthalten, dessen mittleres Molekulargewicht pro Hydroxylgruppe zwischen dem entsprechenden Gewicht der Bestandteile f) und g) der Zusammensetzung liegt. Für den chemischen Aufbau der Polyole und Polyetherpolyole dieses Härtertyps gilt sinngemäss, d. h. unter Beachtung der teilweise anderen Äquivalentgewichte und Funktionalitäten, ebenfalls das, was oben für die Polyole und Polyetherpolyole der erfindungsgemässen Zusammensetzungen gesagt wurde. Diejenigen der genannten Zusammensetzungen, die als Komponente f) ein Polypropylenglycol enthalten, ermöglichen -in reiner Form eingesetzt und bei Einhaltung der oben angeführten Isocyanatkennzahlen für das Reaktionsgemisch- in vielen Fällen Verarbeitungszeiten bis zu 180 Minuten und können daher in Verbindung mit den erfindungsgemässen Härtern, wenn dies erwünscht ist, zur Verlängerung der Topfzeiten der Reaktionsgemische eingesetzt werden.

Eine besonders günstige Ausführungsform bilden daher erfindungsgemässe härtbare Reaktionsgemische, die wenigstens zwei verschiedene Härterkomponenten enthalten, die, jeweils allein mit dem eingesetzten Polyisocyanat in einem Gemisch gleicher Isocyanatkennzahl verwendet, unterschiedliche Verarbeitungszeiten ermöglichen, wobei das Reaktionsgemisch eine Verarbeitungszeit aufweist, die zwischen den mit den einzelnen Härterkomponenten alleine erreichbaren liegt und bei Raumtemperatur und ohne zusätzliche Beheizung aushärtet, ohne dass hierbei eine Sprödphase auftritt.

In manchen Fällen kann es dabei zweckmässig sein, wenn die verschiedenen Härterkomponenten verschiedenartig eingefarbt sind, da dann im allgemeinen aus der sich ergebenden Mischfarbe des Reaktionsgemisches die maximal mögliche Verarbeitungszeit des Gemisches besonders leicht bestimmt werden kann.

Reaktionsgemische mit längerer Verarbeitungszeit sind, wie üblich, insbesondere für die Herstellung und Verarbeitung von Hand geeignet, während Gemische mit kurzer Topfzeit zweckmässig sowohl maschinell abgemischt als auch maschinell nach den an sich bekannten, z. B. in Ullmanns Encyclopädie der technischen Chemie, 4. Aufl. Bd. 19, Verlag Chemie GmbH, Weinheim 1980, S. 316 ff beschriebenen Verfahrenstechniken, wie der Reaktionsspritzgusstechnik, der Vakuumvergusstechnik und anderer, zu Formkörpern weiterverarbeitet werden.

Gewünschtenfalls können die erfindungsgemässen Härterzusammensetzungen vor der Herstellung der Reaktionsgemische auch längere Zeit zwischengelagert werden, ohne dass sich die Flüssigphase entmischt, und können nach der Lagerung eingesetzt werden, ohne dass erst erneut die Bildung einer homogenen Emulsion aus den Flüssigbestandteilen der Zusammensetzungen nötig wäre.

Einen Gegenstand der Erfindung bildet daher auch ein Verfahren zur Herstellung von Polyurethanformkörpern, bei dem eine Komponente auf Basis von Polyisocyanaten der Diphenylmethanreihe mit wenigstens einer der erfindungsgemässen, gegebenenfalls zuvor zwischengelagerten Härterzusammensetzungen und gegebenenfalls weiteren in der Polyurethantechnologie üblichen Zusatzstoffen zu einem härtbaren Reaktionsgemisch, wie den beschriebenen, vermischt, die erhaltene Mischung geformt und zum Formkörper ausgehärtet wird.

Die Härtung erfolgt dabei im allgemeinen bei einer Temperatur zwischen 15 und 40 °C, besonders bevorzugt bei Raumtemperatur, d. h. bei ca. 15 bis 25 °C, und ohne zusätzliche Erwärmung der Masse durch Beheizung der eingesetzten Form. Es findet eine homogene Härtung statt. Obwohl dies nicht erforderlich ist, können die bereits ihrer Gussform entledigten Formkörper gegebenenfalls noch bei höheren Temperaturen nachgehärtet werden.

Einen weiteren Gegenstand der Erfindung stellen schliesslich Polyurethanformkörper dar, erhältlich aus einem Giessharz, das einem der oben beschriebenen Reaktionsgemische entspricht.

Besonders bevorzugt sind Polyurethanformkörper, die keinen freien Weichmacher enthalten. Unter dem Begriff "freier Weichmacher" werden dabei konventionelle Weichmacherverbindungen verstanden, also solche, die keine funktionellen Gruppen aufweisen, die sich an der Umsetzung des Polyisocyanats mit den Härterzusammensetzungen beteiligen. Weichmacher dieses Typs, z. B. Adipinsäureester, Dibutyl- oder Dioctylphthalate, die häufig den Härterzusammensetzungen zur Homogenisierung und zur Steigerung der Elastizität des Polyurethanmaterials zugesetzt wurden, haben den Nachteil, dass sie langsam aus dem Material ausschwitzen, was zu einer ständig ansteigenden Versprödung des Polyurethanmaterials während seiner Lebensdauer führt. Aufgrund der speziellen Zusammensetzung der erfindungsgemässen Härterzusammensetzung sind solche konventionellen Weichmacher aber in aller Regel unnötig, so dass erfindungsgemässe Formkörper im Laufe ihres Lebens ihre Elastizitätseigenschaften kaum verändern.

Gemäss der Erfindung können besonders einfach Polyurethanformkörper wechselnder Grösse hergestellt werden. Ein besonderer Vorteil der vorliegenden Erfindung ist dabei, dass die Topfzeiten der erfindungsgemässen Reaktionsgemische besonders leicht gesteuert und in grosser Breite variiert werden können. Je grösser eine Form ist, desto länger ist nämlich im allgemeinen auch die Füllzeit, die für sie erforderlich ist. Die Topfzeit des verwendeten Reaktionsgemisches muss aber selbstverständlich zumindest etwas länger als die Füllzeit der verwendeten Form sein. Bei Lagerhaltung einer Polyisocyanatzusammensetzung und zumindest zweier Härterzusammensetzungen, die unterschiedliche Topfzeiten mit dem Polyisocyanat ergeben, können aber, z. B. in der weiter oben beschriebenen Weise, schnell und in einfacher Weise auch maschinell den jeweiligen Erfordernissen angepasste Reaktionsgemische hergestellt werden, ohne dass dabei Änderungen der Eigenschaften des daraus hergestellten Polyurethanmaterials aufgrund eines geänderten Mischungsverhältnisses von Isocyanat zu Gesamtmenge Härter in Kauf genommen werden müssen.

### Beispiele

Die in den folgenden Beispielen mit Handelsnamen bezeichneten Bestandteile sind im folgenden näher charakterisiert:
- LUPRANOL® 3321: Gemisch eines mit Sucrose und eines mit Glycerin gestarteten Polypropylenglycols mit einem mittleren Molekulargewicht pro Hydroxylgruppe von 140 (CAS-Nr. 56731-02-3),
- OUADROL®L: Tetrakis(2-hydroxypropyl)-ethylendiamin (CAS-Nr. 102-60-3),
- LUPRANOL® 2000: mit Glycerin gestartetes Polyalkylenglycol, das aus Ethylenoxid- und Propylenoxideinheiten besteht, mittleres Molekulargewicht pro Hydroxylgruppe 1340 (CAS-Nr. 9082-00-2),
- LUPRANOL® 2042: mit Trimethylolpropan gestartetes Polyalkylenglycol, das aus Ethylenoxid- und Propylenoxideinheiten besteht, mittleres Molekulargewicht pro Hydroxylgruppe 2150 (CAS-Nr. 52624-57-4),
- JEFFAMINE®D 2000: ein aminoterminiertes Polypropylenglycol mit einem Gesamtmolekulargewicht von ca. 2000 und der allgemeinen Formel H₂NCH(CH₃)CH₂-[OCH₂CH(CH₃)]ₓ-NH₂ (x im Durchschnitt 33),
- POLYSORB® 668: Trocknungsmittel auf Basis eines Zeolithen in Rizinusöl.

Beispiele 1 - 5: Es werden Härterzusammensetzungen durch Vermischen der in nachstehender Tabelle 1 jeweils angegebenen Bestandteile hergestellt. Diese können mehrere Monate bei Raumtemperatur gelagert werden, ohne dass sie sich in einer Weise entmischen, dass sich mehrere Flüssigphasen ausbilden.

Weiterhin wird eine Polyisocyanatzusammensetzung aus 75,2 Gew.-% 4,4'-Diisocyanatodiphenylmethan (4,4'-MDI), 10 Gew.-% 2,4'-MDI, 1,8 Gew.-% 2,2'-MDI, 3,1 Gew.-% MDI-Oligomeren, 0,6 Gew.-% MDI-Carbodiimid und 9,4 Gew.-% MDI-Urethdion (beispielsweise durch Mischung von 70 Gew.-% DESMODUR® CD und 30 Gew.-% DESMODUR® VL 50) hergestellt. Diese Isocyanatzusammensetzung weist eine Dichte von 1,22 g/ml und eine Viskosität von 30 mPa·s auf.

Sie wird von Hand in einem Gewichtsverhältnis von 80 zu 100 mit den Härterzusammensetzungen gemäss Tabelle 1 vermischt. Die erhaltenen Mischungen eignen sich wegen ihrer relativ langen Topfzeiten gut zum Vergiessen von Hand. Durch Härtung der Mischung bei Raumtemperatur erhält man ein Polyurethanmaterial mit den im unteren Teil der Tabelle 1 angeführten Eigenschaften. Eine Sprödphase während der Härtung kann bei keinem der in den Beispielen 1 bis 5 verwendeten Reaktionsgemische festgestellt werden.

Beispiele 6 und 7: Es werden weitere Härterzusammensetzungen durch Vermischen der in nachstehender Tabelle 2 jeweils angegebenen Bestandteile hergestellt. Auch diese sind bei Raumtemperatur ohne Entmischung über Monate haltbar. Als Isocyanatkomponente wird rohes technisches Diisocyanatodiphenylmethan (DESMODUR® 44V20) verwendet. Diese wird im Gewichtsverhältnis von 80 zu 100 mit den jeweiligen Härterkomponenten vermischt. Die erhaltenen Mischungen eignen sich wegen ihrer grösseren Reaktivität gut zum maschinellen Vergiessen. Durch Härtung der Mischung bei Raumtemperatur erhält man ein Polyurethanmaterial mit den im unteren Teil der Tabelle 2 angeführten Eigenschaften. Wieder kann eine Sprödphase während der Härtung bei keinem der beiden Reaktionsgemische festgestellt werden.

Beispiele 8 bis 10: Es werden weitere Härterzusammensetzungen durch Vermischen der in nachstehender Tabelle 3 jeweils angegebenen Bestandteile hergestellt. Auch diese sind bei Raumtemperatur ohne Entmischung über Monate haltbar. Die jeweils eingesetzte Mengen Härter- und Isocyanatkomponente sind in der Tabelle ebenfalls angegeben. Durch Härtung der Mischung bei Raumtemperatur erhält man ein Polyurethanmaterial mit den im unteren Teil der Tabelle 3 angeführten Eigenschaften, wobei insbesondere die hohen Wärmeformbeständigkeiten auffallen, insbesondere die Wärmeformbeständigkeit des unter Verwendung von Polyethylenglycol erhaltenen Materials (Beispiel 9). Wieder kann eine Sprödphase während der Härtung bei keinem der Reaktionsgemische festgestellt werden.

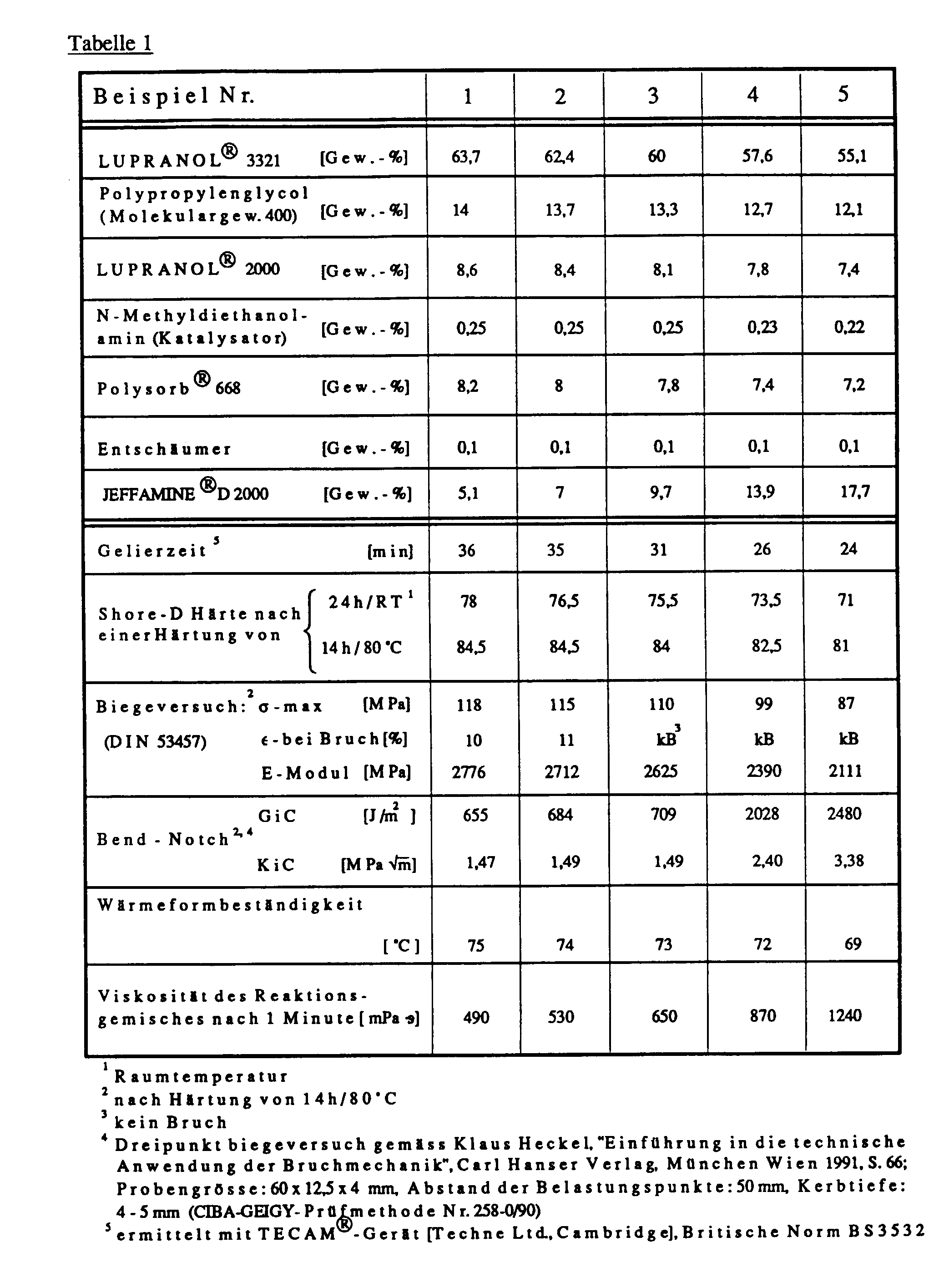

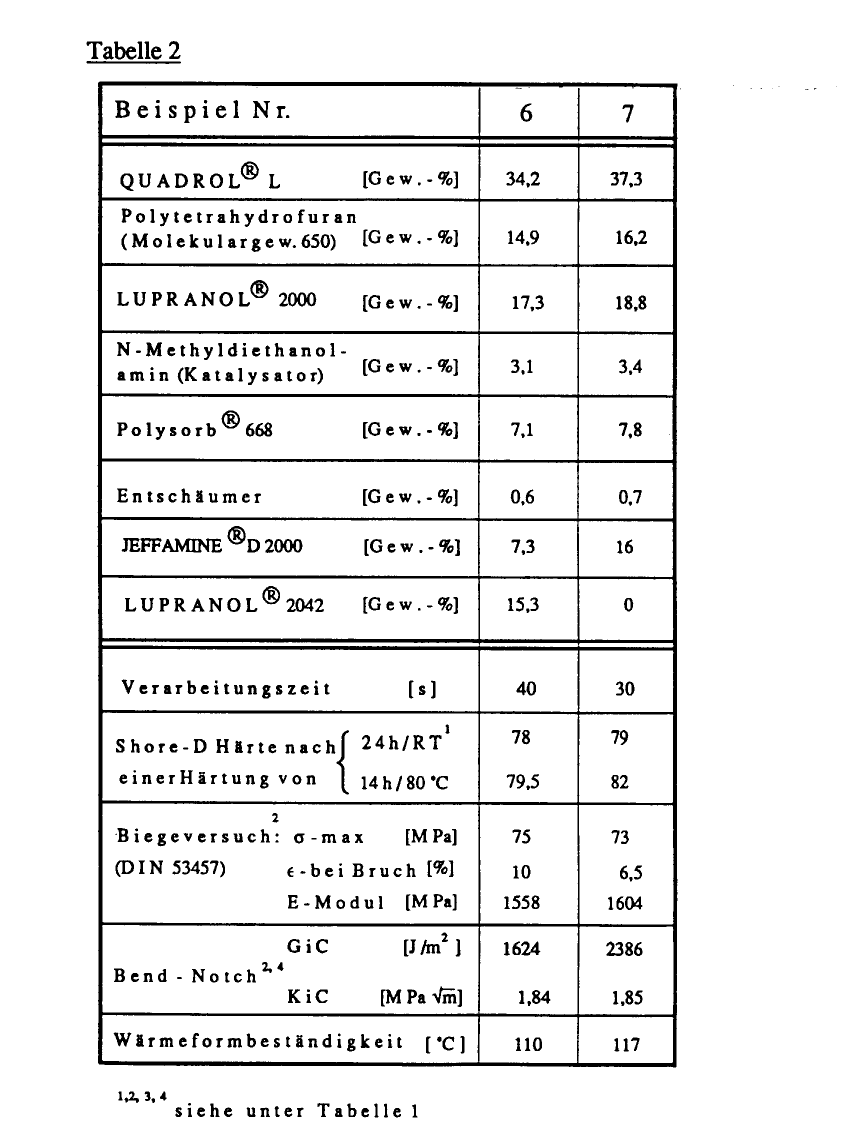

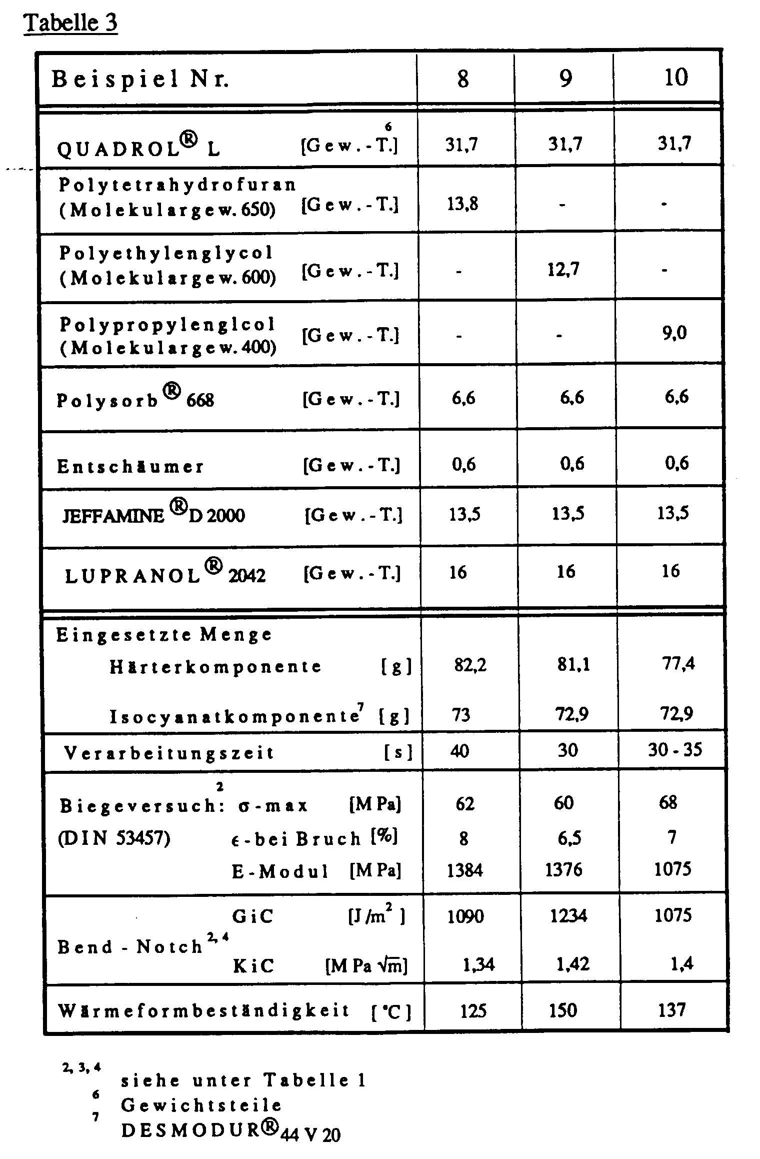

## Patentansprüche

1. Zusammensetzung enthaltend
a) ein Polyol mit durchschnittlich 3 bis 8 Hydroxylgruppen pro Molekül und einem mittleren Molekulargewicht pro Hydroxylgruppe bis zu 150;
b) ein Polyetherpolyol mit durchschnittlich 2 bis 3 Hydroxylgruppen pro Molekül und einem mittleren Molekulargewicht pro Hydroxylgruppe von 150 bis 500 sowie
c) ein Poly(oxyalkylen)polyamin mit durchschnittlich 2 bis 4 Aminogruppen pro Molekül und einem mittleren Gesamtmolekulargewicht zwischen 1000 und 3000.

2. Zusammensetzung nach Anspruch 1, die als Bestandteil b) ein Polytetrahydrofuran enthält.

3. Zusammensetzung nach Anspruch 1, die als Bestandteil b) ein Polypropylenglycol enthält.

4. Zusammensetzung nach Anspruch 1, die als Bestandteil b) ein Polyethylenglycol enthält.

5. Zusammensetzung nach mindestens einem der Ansprüche 1 bis 4 die als weiteren Bestandteil d) in einer Menge von bis zu 80 Gewichtsprozent, bezogen auf die Gesamtmenge der Komponenten c) und d), ein Polyetherpolyol mit durchschnittlich 2 bis 4 Hydroxylgruppen pro Molekül und einem mittleren Molekulargewicht pro Hydroxylgruppe von mehr als 500 enthält.

6. Härtbares Reaktionsgemisch zur Herstellung von Polyurethanformkörpern, enthaltend ein Polyisocyanat der Diphenylmethanreihe und mindestens eine Härterkomponente, bei der es sich um eine Zusammensetzung nach einem der Ansprüche 1 bis 5 handelt.

7. Reaktionsgemisch nach Anspruch 6, das eine Polyisocyanatkomponente enthält, die aus 5 bis 20 Gew.-% Polyisocyanaten, die durch eine Reaktion von Diisocyanatodiphenylmethanen über Isocyanatgruppen erhältlich sind, 2 bis 10 Gew.-% Diisocyanatodiphenylmethan-Polymertypen der allgemeinen Formel 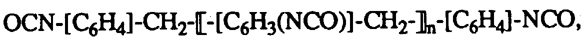 worin n ≥ 1 ist, und 70 bis 93 Gew.-% eines Gemisches aus monomeren Diisocyanatodiphenylmethanisomeren besteht, wobei dieses Gemisch wiederum aus 45 bis 90 Gew.-% 4,4'-Diisocyanatodiphenylmethan und 10 bis 55 Gew.-% 2,4'- und 2,2'-Diisocyanatodiphenylmethan besteht.

8. Reaktionsgemisch nach Anspruch 6 oder 7, das N-Methyldiethanolamin als Katalysator enthält.

9. Reaktionsgemisch nach einem der Ansprüche 6 bis 8, das wenigstens zwei verschiedene Härterkomponenten enthält, die, jeweils allein mit dem eingesetzten Polyisocyanat in einem Gemisch gleicher Isocyanatkennzahl verwendet, unterschiedliche maximale Verarbeitungszeiten ermöglichen, wobei das Reaktionsgemisch eine Verarbeitungszeit aufweist, die zwischen den mit den einzelnen Härterkomponenten alleine erreichbaren liegt und bei Raumtemperatur und ohne zusätzliche Beheizung aushärtet, ohne dass hierbei eine Sprödphase auftritt.

10. Reaktionsgemisch nach Anspruch 9, bei dem die verschiedenen Härterkomponenten verschiedenartig eingefärbt sind.

11. Verfahren zur Herstellung von Polyurethanformkörpern, bei dem eine Komponente auf Basis von Polyisocyanaten der Diphenylmethanreihe mit wenigstens einer gegebenenfalls zuvor zwischengelagerten Zusammensetzung nach einem der Ansprüche 1 bis 5 und gegebenenfalls weiteren in der Polyurethantechnologie üblichen Zusatzstoffen zu einem härtbaren Reaktionsgemisch nach einem der Ansprüche 6 bis 10 vermischt, die erhaltene Mischung geformt und zum Formkörper ausgehärtet wird.

12. Verfahren nach Anspruch 11, bei dem die Härtung bei Raumtemperatur und ohne zusätzliche Erwärmung der eingesetzten Form erfolgt.

13. Polyurethanformkörper, erhältlich aus einem Reaktionsgemisch nach mindestens einem der Ansprüche 6 bis 10.

14. Polyurethanformkörper nach Anspruch 13, der keinen freien Weichmacher enthält.

## Claims

1. A composition comprising
a) a polyol having on average 3 to 8 hydroxyl groups per molecule and an average molecular weight per hydroxyl group of up to 150;
b) a polyether-polyol having on average 2 to 3 hydroxyl groups per molecule and an average molecular weight per hydroxyl group of 150 to 500 and
c) a poly(oxyalkylene)polyamine having on average 2 to 4 amino groups per molecule and an average total molecular weight of between 1000 and 3000.

2. A composition according to claim 1, which comprises a polytetrahydrofuran as constituent b).

3. A composition according to claim 1, which comprises a polypropylene glycol as constituent b).

4. A composition according to claim 1, which comprises a polyethylene glycol as constituent b).

5. A composition according to at least one of claims 1 to 4, which comprises a polyether-polyol having on average 2 to 4 hydroxyl groups per molecule and an average molecular weight per hydroxyl group of more than 500 as a further constituent d) in an amount of up to 80% by weight, based on the total amount of components c) and d).

6. A curable reaction mixture for the production of polyurethane shaped articles, comprising a polyisocyanate of the diphenylmethane series and at least one hardener component which is a composition according to any one of claims 1 to 5.

7. A reaction mixture according to claim 6, which comprises a polyisocyanate component which comprises 5 to 20% by weight of polyisocyanates obtainable by a reaction of diisocyanatodiphenylmethanes via isocyanate groups, 2 to 10% by weight of diisocyanatodiphenylmethane polymer types of the general formula 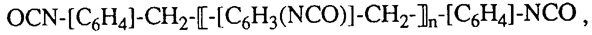 in which n is ≥ 1, and 70 to 93% by weight of a mixture of monomeric diisocyanatodiphenylmethane isomers, this mixture in turn comprising 45 to 90% by weight of 4,4'-diisocyanatodiphenylmethane and 10 to 55% by weight of 2,4'- and 2,2'-diisocyanatodiphenylmethane.

8. A reaction mixture according to claim 6 or 7, which comprises n-methyldiethanolamine as a catalyst.

9. A reaction mixture according to any one of claims 6 to 8, which comprises at least two different hardener components, each of which, when used by itself with the polyisocyanate employed in a mixture of the same isocyanate number, allows different maximum processing times, the reaction mixture having a processing time which lies between those which can be achieved with the individual hardener components by themselves and curing fully at room temperature and without additional heating, without a brittle phase occuring during this operation.

10. A reaction mixture according to claim 9, in which the different hardener components are differently coloured.

11. A process for the production of polyurethane shaped articles in which a component based on polyisocyanates of the diphenylmethane series is mixed with at least one composition according to any one of claims 1 to 5, which may have been intermediately stored beforehand, and, if appropriate, other additives customary in polyurethane technology to give a curable reaction mixture according to any one of claims 6 to 10, and the resulting mixture is shaped and cured fully to give the shaped article.

12. A process according to claim 11, in which the curing is carried out at room temperature and without additional heating of the mould employed.

13. A polyurethane shaped article obtainable from a reaction mixture according to at least one of claims 6 to 10.

14. A polyurethane shaped article according to claim 13, which comprises no free plasticiser.

## Revendications

1. Composition contenant
a) un polyol ayant en moyenne de 3 à 8 groupes hydroxyle par molécule et un poids moléculaire moyen par groupe hydroxyle allant jusqu'à 150;
b) un polyétherpolyol ayant en moyenne de 2 à 3 groupes hydroxyle par molécule et un poids moléculaire moyen par groupe hydroxyle compris entre 150 et 500; ainsi que
c) une poly(oxyalkylène)polyamine ayant en moyenne de 2 à 4 groupes amino par molécule et un poids moléculaire total moyen compris entre 1000 et 3000.

2. Composition selon la revendication 1, contenant un polytétrahydrofurane comme composant b).

3. Composition selon la revendication 1, contenant un polypropylène glycol comme composant b).

4. Composition selon la revendication 1, contenant un polyéthylène glycol comme composant b).

5. Composition selon l'une au moins des revendications 1 à 4, contenant comme composant d) supplémentaire un polyétherpolyol ayant en moyenne de 2 à 4 groupes hydroxyle par molécule et un poids moléculaire moyen par groupe hydroxyle supérieur à 500, en une quantité allant jusqu'à 80 % en poids, ramenée à la quantité totale des composants c) et d).

6. Mélange réactionnel durcissable destiné à la fabrication de corps façonnés en polyuréthane, contenant un polyisocyanate de la famille du diphénylméthane et au moins un composant durcisseur, lequel composant est une composition selon l'une des revendications 1 à 5.

7. Mélange réactionnel selon la revendication 6, contenant un composant polyisocyanate constitué de 5 à 20 % en poids de polyisocyanates pouvant être obtenus en faisant réagir des diisocyanatodiphénylméthanes sur des groupes isocyanates, de 2 à 10 % en poids de types de polymères de diisocyanatodiphénylméthane de la formule générale OCN- [C₆H₄]-CH₂-{-[C₆H₃(NCO)]-CH₂-}ₙ-[C₆H₄]-NCO, dans laquelle n est supérieur ou égal à 1, et de 70 à 93 % en poids d'un mélange d'isomères de diisocyanatodiphénylméthane monomères, ledit mélange étant lui-même constitué de 45 à 90 % en poids de 4,4' -diisocyanatodiphénylméthane et de 10 à 55 % en poids de 2,4'- et de 2,2'-diisocyanatodiphénylméthane.

8. Mélange réactionnel selon la revendication 6 ou la revendication 7, contenant de la N-méthyldiéthanolamine comme catalyseur.

9. Mélange réactionnel selon l'une des revendications 6 à 8, contenant au moins deux composants durcisseurs différents qui, lorsqu'ils sont respectivement employés seuls avec le polyisocyanate utilisé dans un mélange ayant le même indice d'isocyanate, permettent des temps de traitement maximum différents, le mélange réactionnel présentant un temps de traitement qui se situe entre les temps qu'il est possible d'obtenir avec chaque composant durcisseur utilisé seul, à la température ambiante et sans chauffage supplémentaire, et ce sans qu'il se produise une phase fragile.

10. Mélange réactionnel selon la revendication 9, dans lequel les différents composants durcisseurs sont teintés de manière différente.

11. Procédé de fabrication de corps façonnés en polyuréthane, dans lequel un composant à base de polyisocyanates de la famille du diphénylméthane est mélangé à au moins une composition selon l'une des revendications 1 à 5, ayant subi le cas échéant auparavant un stockage intermédiaire, et, le cas échéant, à d'autres additifs usuels dans la technologie des polyuréthanes afin d'obtenir un mélange réactionnel durcissable selon l'une des revendications 6 à 10, et dans lequel le mélange ainsi obtenu est formé et durci pour donner un corps façonné.

12. Procédé selon la revendication 11, dans lequel le durcissement se fait à la température ambiante et sans chauffage supplémentaire du moule utilisé.

13. Corps façonné en polyuréthane pouvant être obtenu à partir d'un mélange réactionnel selon l'une au moins des revendications 6 à 10.

14. Corps façonné en polyuréthane selon la revendication 13, ne contenant aucun plastifiant libre.
